# EUROPEAN PATENT APPLICATION

(11) **EP 4 834 466 A1**
(43) Date of publication of application: **04.11.2026**
(21) Application number: 25173594.0
(22) Date of filing: 30.04.2025
(51) Int. Cl.: B01J 19/00, G05B 13/02

(54) **METHOD FOR CONTROLLING REPETITIVE PROCESSES**

(71) Applicant: Covestro Deutschland AG, 51373 Leverkusen (DE)
(72) Inventor: KÜPPER, Achim, 51375 Leverkusen (DE)
(74) Representative: Levpat

(57) **Abstract**

The present teachings relate to a method for controlling repetitive processes, with at least one preceding process and a following subsequent process, the method comprising the following process steps:
- Measuring of an actual value of a process variable during the preceding process;
- Control of the actual value of the process variable to a setpoint value using a manipulated variable;
- Recording of a trajectory of the manipulated variable during the preceding process;
- Deriving a derived trajectory of the manipulated variable for the subsequent process from the trajectory of the manipulated variable of the preceding process, wherein for the derived trajectory of the manipulated variable the trajectory of the manipulated variable of the preceding process is shifted backwards in time in relation to the time sequence of the subsequent process compared to the trajectory of the manipulated variable of the preceding process in relation to the time sequence of the preceding process;
- Superposition of the previously derived trajectories with a modification of the controller to obtain the derived trajectory for the subsequent process
- Applying the derived trajectory of the manipulated variable to the subsequent process.

## Description

The present teachings relate to methods for controlling repetitive processes according to claim 1. Repetitive processes are in particular batch-to-batch processes, with repetitive process steps. Repetitive processes also comprise distinct phases of a continuous process which occur repeatedly during start-up, shutdown or known disturbances. The present teachings further relate to computer software products being able to perform the method steps of the method according to claim 13. Further the present teachings relate to a method for the production of chemicals according to claim 14.

Repetitive processes are well known for example in the field of synthesis of chemicals. A repetitive process may be a production process, where in a discontinuous manner - in several batches - chemicals are synthesized. Several batches are performed successively where each batch has similar if not identical properties. In a single batch, e.g., reactants are processed in a reactor to gain desired reaction products. To realize products with particular characteristics and quality relevant process variables are monitored throughout the process and usually the process is controlled in a way that the actual value of the process variable is set to a setpoint value by means of a manipulated variable. In a control cycle, the so influenced process variable is fed back to the controller to adjust the manipulated variable.

In many applications the temperature management of a reactor is of particular importance. The temperature has a significant influence on the reaction rate and thus the conversion of the reactants into products, and also on the occurrence of side reactions and thus on the yield and product quality. Furthermore, in most cases temperature ramps, for example to heat up the reactor in a starting phase or to cool the reactor in an end phase, should be steep to reduce the process time (batch time) and to enhance reactor capacity. The reactor temperature may further be influenced by the reaction, which can be exothermic or endothermic. The reaction can be started by addition of a catalyst and/or by reaching a certain temperature. This starting reaction leads then to an abrupt change in the reactor temperature. The cooling of the reactor provided by the cooling system is due to underlying time delay which slows down the necessary control action of a temperature control scheme.

The control of the temperature throughout the process is thus not trivial. During the process it is crucial to prevent too high temperatures and overshooting of the temperature which may negatively affect the quality of the reactor products, the reaction and the reactor itself. So, a good temperature management is necessary, and the temperature of the reactor has to be controlled to be close to a setpoint value.

Cooling or heating of the reactor may be done by means of a heat exchanger. The heat exchanger can be a jacket surrounding the reactor and over an exchange surface heat between the reactor and jacket is exchanged. As a further option, the reaction participants (reaction products) can be supplied to an external heat exchanger, in which they are cooled or heated and then fed back into the reactor. The cooling jacket which is the heat exchanger of the reactor and the external heat exchanger can be supplied by the same coolant and hence have the same inlet temperature or they can have different cooling circuits. The inlet temperature can be controlled by the ratio of fresh coolant and recycled coolant which has been heated up in the reactor heat exchanger or external heat exchanger. The coolant can also be run in a circle without supply of fresh coolant. The inlet temperature is then controlled via additional heat exchangers that are operated with steam and another coolant.

Amongst the temperature, also other process variables, such as pressure and product composition can be crucial for the success of the reaction. So, the above chosen example of temperature control should not be regarded as limiting for the present teachings.

As described above, the control of the temperature, or any other process variable, is usually done by setting the process value to a predetermined setpoint value by means of a manipulated variable, which is applied throughout multiple processes controlled by a controller.

It is the aim of the invention to provide a method for controlling repetitive processes and a computer software product and a method for the production of chemicals, which will lead to a better quality of the reaction products.

According to the present teachings a method for controlling repetitive processes is provided, wherein the repetitive processes comprise at least one preceding process and a following subsequent process. In particular, multiple processes are following each other.

A process in this context shall be considered as a clearly defined, self-contained process, with a defined start and a defined end. In particular, the repetitive process is a batch-to-batch process with a repetitive sequence of single batches, each batch comprising a start phase, a reaction phase and an end phase. A repetitive process can also be defined as a particular (reaction) step or a distinct phase in a continuous process, for example a start-up phase, which is present at the beginning of several continuous processes, or a change in through-put.

The preceding process and the subsequent process are nominally identical, which means they have the same process steps and time sequence and are supposed to deliver the same reaction products and quality and/or plant behavior under the same or similar reaction conditions or process conditions. In particular, repetitive processes resemble in their conversion of reactants to products and/or their corresponding thermal behavior and show the same or similar reaction enthalpy.

In particular a preceding process is a first batch and a subsequent process is a second batch.

The process is in particular a reaction process, wherein reactants are reacted to products. The process may be a synthesis process of polymer materials, in particular polyurethanes and polycarbonates.

In one embodiment, the first main component comprises a haloaromatic and/or the second main component a polyisocyanate. Examples of haloaromatics are monochlorobenzene and the isomeric dichlorobenzenes. Examples of isocyanates are 1,4-diisocyanatobutane, 1,5- diisocyanatopentane, 1,6-diisocyanatohexane (HDI), 2-methyl-l,5-diisocyanatopentane, l,5-diisocyanato-2,2-dimethylpentane, 2,2,4- or 2,4,4-trimethyl-l,6-diisocyanatohexane, 1,10-diisocyanatodecane, 1,3- and 1,4-diisocyanatocyclohexane, 1,3- and l,4-bis-(isocyanatomethyl) cyclohexane, 1 -isocyanato-3,3,5-trimethyl-5- isocyanatomethylcyclo-hexane (isophorone diisocyanate, IPDI), 4,4'-diisocyanatodicyclohexylmethane, 4-isocy-anatomethyloctane 1,8-diisocyanate (triisocyanatononane, TIN), (n,(D'-diisocyanato-1,3-dimethylcyclohexane (H6XDI), 1 -isocyanato-1 -methyl-3-isocyanatomethylcyclohexane, 1 -isocyanato-1 -methyl-4-isocyanatomethylcyclohexane, bis(isocyanatomethyl)norbornane, naphthalene 1,5- diisocyanate, 1,3- and l,4-bis(2-isocyanato-prop-2-yl) benzene (TMXDI), 2,4- and 2,6-diisocyanatotoluene (TDI), especially the 2,4 and 2,6 isomers and technical grade mixtures of the two isomers, 2,4'- and 4,4'-diisocyanatodiphenylmethane (MDI), 1,5-diisocyanatonaphthalene, 1,3- bis(isocyanatomethyl)benzene (XDI).

Alternatively, the process is used for the production of polymer solutions, emulsions, suspensions, gels, foams, lubricants, adhesives, drilling muds, pharmaceuticals, cosmetic creams, detergents, paint additives, concrete, inkjet inks, battery electrolytes, coolants, non-dairy milk alternatives, biological fluids, agricultural spray, hydraulic fluids, firefighting foams, resins, molten plastics, electronic solder pastes, cement slurries, phase changing materials and/or aerospace sealants.

The subsequent process in particular follows immediately the preceding process. Immediately means here that no further steps between the preceding process and the subsequent process occur, which will have a severe effect on the process condition. For example, no synthesis of another chemical is performed between two subsequent processes for synthesis of a first chemical.

The method comprises the following process steps:
- Measuring of an actual value of a process variable during the preceding process.

In a non-limiting embodiment, a process variable can be a temperature in a reactor, which can be determined directly or indirectly. The actual value of the process variable can be measured via a respective sensor directly or indirectly determining the actual value.
- Control of the actual value of the process value to a setpoint value using a manipulated variable.

The setpoint value is for example a predetermined reactor temperature, to which the actual value of the process variable is to be set. The controlling of the actual value in order to be set to the setpoint value is done by means of a manipulated variable, which can be for example a coolant flow.

The manipulated variable for controlling of the actual value of the process variable to the setpoint value is determined by a controller. The controller can be a PID-controller or a model predictive control (MPC) as known in the art. The controller can be a cascaded controller with a primary controller and a secondary controller. In a non-limiting example, the primary controller sets the setpoint value for the reactor temperature, wherein the secondary controller sets the temperature for the cooling jacket as manipulated variable.

In one example, the process variable is a reactor temperature, which is controlled directly by an inlet temperature to or the temperature of a cooling jacket, which is the manipulated variable. Hence, the variation of the manipulated variable by the controller corresponds to a temperature difference between the reactor and the cooling jacket. By also taking into account the movement of the reactor temperature the controlling of the process is linearized. The absolute value of the temperature difference between reactor and the cooling jacket corresponds to the heat dissipation from the reactor to the cooling jacket, which reflects the reaction enthalpy time-delayed by the lag of the underlying control loop.
- Recording (storing the measured value in a memory block) of a trajectory as a time-series over the batch time of the manipulated variable during the preceding process.

Next, the trajectory of the manipulated variable, which is the temporal evolution of the manipulated value, is recorded. The trajectory of the manipulated variable is in particular recorded from the manipulated variables determined by the controller (PID or MPC) and can be regarded as a setpoint trajectory of the respective manipulated variable.
- Deriving a derived trajectory of the manipulated variable for the subsequent process from the trajectory of the manipulated variable of the preceding process, wherein for the derived trajectory of the manipulated variable the trajectory of the manipulated variable of the preceding process is shifted backwards in time in relation to the time sequence of the subsequent process compared to the trajectory of the manipulated variable of the preceding process in relation to the time sequence of the preceding process.

As explained in more detail below, a derived trajectory may be calculated based on the trajectories recorded during the preceding processes (superposition). The derived trajectory can be subjected to noise suppression and/or the absolute values of the trajectory can be amplified or damped.
- Applying the derived trajectory of the manipulated variable to the subsequent process. The actual controller (PID or MPC) modifies this derived trajectory during the batch according to the remaining deviation of the reactor temperature from its setpoint in order to control the reactor temperature.

As the preceding process and the subsequent process are essentially identical with respect to their physical behavior (including possibly a chemical reaction) over a time sequence, the derived trajectory, which is shifted backwards in time, is applied at an earlier stage in the subsequent process as the trajectory of the manipulated variable in the preceding process. This can be regarded as a shift backwards in time from the preceding process to the subsequent process of the respective derived trajectory of the manipulated variable. In the subsequent process the manipulated variable is preset based on the applied derived trajectory and - during the ongoing subsequent process - the manipulated value is further adapted based on the feedback of the difference between the measured actual value of the process variable and its setpoint.

The shift backwards reflects in an ideal case the time delay of the underlying control loop, e.g. the temperature control of the cooling jacket, which is then compensated by the backshift. In case of the above-described temperature controlling via the jacket temperature of a jacket surrounding the reactor, the effect of the cooling through the cooling jacket is delayed due to the inertness of the system. By moving the derived trajectory backwards in time, the manipulated value (cooling) can be set in a way such that it is applied nearly simultaneously to the trajectory of the actual value. The disturbance of the process, e.g., due to the reaction, can then be anticipated and counteracted and the actual value can be kept close to the setpoint value.

In summary, the decisive advantage of the herein described method is that the information of the preceding process is used in the form of the derived trajectory of the manipulated value and by shifting the derived trajectory backwards, so that the expected disruption in the subsequent process is counteracted in advance. The precise control of the process variable during the process leads to high quality product and high output.

With this method a characteristic trajectory of the manipulated value (e.g., a cooling trajectory) is automatically generated. The method is able to respond during ongoing operation of the processes to changes of the production system, e.g., a changing activity of the reactants or the catalysator or a deteriorated heat exchange or fouling in the process unit.

The process according to the present teachings has the advantage that with each additional subsequent process, which follows on one or more preceding processes, the optimal strategy on how to run the process is established, the difference between the actual value and the setpoint value of the controlled process variable decreases and also the necessary modification or adjustment of the manipulated variable via the feedback from the PID (or MPC) controller decreases, which then iterates into a better controlled process with less overshoots and consequently to a product of better quality. The method also allows for immediate adaption to changes in reactor behavior.

In a non-limiting embodiment, the actual value of the process variable and the trajectory of the manipulated variable are also recorded during the subsequent process and are used to derive a further derived trajectory applied on a further subsequent process following the subsequent process. In one example, while performing the subsequent process, the method starts again with the first method step and measures the actual value of a process variable, which is now controlled taking into account the derived trajectory of the manipulated value of the preceding process. A further trajectory of the manipulated variable to control the actual value to the setpoint value is derived based on the derived trajectory of the preceding process and the actual process (i.e. the subsequent process). The method steps can be performed repeatedly in order to control multiple consecutive processes of substantially similar process conditions, process steps and time sequence.

The process variable may be a process temperature, which can be a temperature inside a reactor. The temperature inside the reactor can be measured directly, e.g., with a temperature sensor inside the reactor. The process variable may also be a temperature in a distillation column.

In addition or alternatively, the process variable may be a process pressure inside the reactor. The pressure inside the reactor may also have major influence on the reaction products.

Further in addition or alternatively, the process variable may be a reactant flow, which can be a reactant flow at an inlet of the reactor and/or a product flow at an outlet of the reactor. The process variable may also be a composition of a product, a density of the product and/or the viscosity of a product. The product composition may be obtained via a process analytics device (PAT) device (e.g., NIR chromatography).

One or multiple of the above-described process variables may be measured and controlled during the processes.

The manipulated variable may be a coolant flow or a heat flow. The temperature or the flow rate of the coolant flow or heat flow is in particular adjusted to control the reactor temperature. The coolant flow or heat flow may be used to temper a cooling jacket surrounding the reactor and/or an external heat exchanger. In the case of an exothermic reaction, in particular a coolant flow is applied to set the temperature of the reactor as process variable to the corresponding setpoint value. If the reaction is endothermic, in particular a heat flow is applied to increase the temperature. The temperature of the coolant flow or heating flow can be influenced by the ratio of fresh coolant and recycled coolant. Recycled coolant may be returned coolant from the heat exchanger and/or the external heat exchanger which is then supplied again to the cooling circuit. The temperature of the coolant flow or heat flow can be increased by applying steam. The steam flow and/or a steam pressure may be set also indirectly via the position of valves. The coolant can also be run in a circle without supply of fresh coolant. The inlet temperature is then controlled via additional heat exchangers that are operated with steam and another coolant.

The manipulated variable may in addition or alternatively be a catalyst flow or a reactant flow. The addition of a catalyst to the reaction may start the reaction and increase the reaction rate, which in case of an exothermic reaction will lead to a temperature increase. In case of an endothermic reaction, the addition of a catalyst will lead to a decrease in temperature. The addition of catalyst can also be used to control the reactor temperature.

A further manipulated variable may be the return flow of a distillation column.

In one embodiment, the trajectory of the manipulated value recorded for the preceding process is proportional to a trajectory of a reaction enthalpy of this preceding process. This may be the case if the difference of jacket temperature to the reactor temperature is used as a manipulated variable to control the reactor temperature. The heat of reaction leaves the reactor in most cases mainly via the transfer rate from the reactor to the cooling jacket which can be described as $Q = k * A * \left(T-{T}_{CJ}\right) = k * A * ΔT$ with ΔT as temperature difference between reactor temperature and cooling jacket temperature. The energy balance of the reactor considering the heat transfer to the reactor and the heat of reaction can be described as $dT / dt = - Q + {Q}_{r}$ wherein
Q = heat transfer rate from reactor to the cooling jacket
k = heat transfer coefficient
A = surface area where the heat transfer occurs
m = mass in the reactor
T = reactor temperature
T_{CJ} = temperature of the cooling jacket
ΔT = difference between reactor temperature and cooling jacket temperature
Qᵣ. = heat of reaction
dT/dt = derivative of reactor temperature with respect to time
t = time

Other heat flows like heat losses to the environment or heat input from a stirrer are expected to be small and/or roughly constant from a dynamic point of view such they are compensated for by a constant contribution to the control action. Hence, they are not stated here.

From a control perspective the actual heat of reaction as main disturbance to the reactor temperature is unknown. The temperature is effectively controlled via the heat transfer between reactor and cooling jacket based on the temperature difference ΔT from the reactor to the cooling jacket. For the case, that the manipulated variable is defined as the actual temperature difference ΔT between the reactor temperature and the cooling jacket temperature, the control of the reactor temperature is transformed into a linear control problem. In order to achieve, the delta temperature required by the control of reactor temperature, the setpoint of the underlying cooling jacket temperature results as T_{CJ} = T + ΔT.

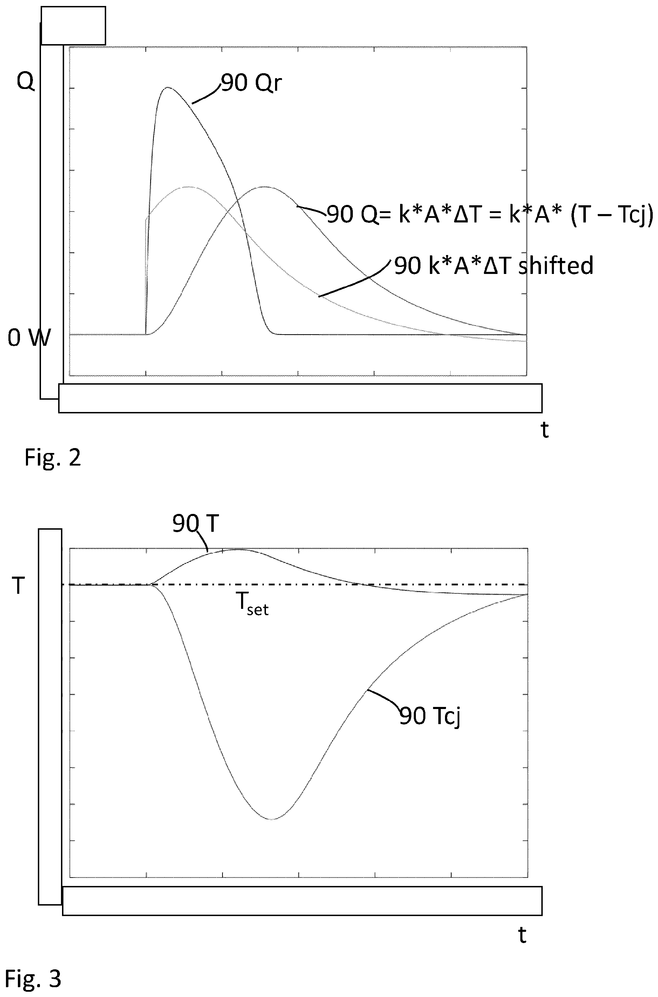

A further advantage of the reformulation is that the precalculation and correction of the trajectory of the manipulated variable from batch-to-batch is linearized which enhances the inter batch correction. The trajectory of the temperature difference can be understood as a delayed representation of the heat of reaction over the batch time. The heat transfer from the reactor to the jacket will balance out the heat of reaction effectively controlling the reactor temperature on its setpoint. Fig. 2 illustrates the approximate representation of the heat of reaction Qr of batch 90 via the actual temperature difference between reactor and cooling jacket ΔT of batch 90 of the heat transfer Q, multiplied by heat transfer coefficient k and surface A. For subsequent batch (not shown), the temperature difference 90 is applied shifted backwards, yielding the to be implemented temperature difference ΔT of subsequent batch, which leads to a tighter control of the reactor temperature on its setpoint. Fig. 3 shows the reactor temperature being controlled on the setpoint Tₛₑₜ via the cooling jacket temperature for the initial batch 90. However, the batch-to-batch correction works also without linearization where the absolute cooling jacket temperature is used as manipulated variable as long as the direction of control action is known, but this is assumed to be given.

In a further non-limiting embodiment, the earliest start time of the derived trajectory of the manipulated variable is determined based on an abrupt change of the actual value of the process variable in the preceding process. The derived trajectory is shifted backwards (and applied to the subsequent process) in the direction at most to a point in time at which an abrupt change in the actual value occurred in the preceding process and will occur in the subsequent process. The backwards shift can be applied so that an abrupt change of the process variable can be counteracted.

An abrupt change means in particular, that the actual value of the process variable changes considerably in a time interval about e.g. more than 5% than the measurement range of the process variable, e.g. by 2°C. The abrupt change can be induced in particular by external influences, such as the addition of a catalysator to the process, inside the reactor.

The derived trajectory is in particular shifted backwards in time with respect to the subsequent process at most up to a point in time at which an abrupt change in the actual value occurs. This point in time can be regarded as an earliest limit at which the derived trajectory is applied to the subsequent process. Setting this early limit for example prevents too early cooling of the reactor which may influence the reaction negatively and may hinder the start of the reaction.

The abrupt change may in a non-limiting example be determined by the actual value of the process variable exceeding a predetermined threshold. An increase or decrease of the actual value of the process variable above or below a predetermined threshold can easily be determined. Such an abrupt change is in particular correlated to the start or end of a reaction or other disturbances which amplify or negatively influence the reaction and should be counteracted in the subsequent process.

In one example, the determination of the abrupt change and hence, the calculation of the shift backwards of the derived trajectory in comparison to the trajectory of the preceding process, can be based on the thermal behavior (the reaction enthalpy). In a simple approach, an abrupt change is detected if the temperature of the reactor exceeds a predetermined threshold. The predetermined threshold can be an absolute value, e.g., 2°C above or below the setpoint value, or it can be a relative value, e.g., 2% above or below the setpoint value.

In addition, the determination of the abrupt change may be further based on a steady-state calculation of the reaction enthalpy using a steady-state calorimetry model, i.e. applying a heat balance to the reactor based on the thermal behavior of the reactor and all energy flows determined by their temperatures. Thereby the temperature of the reactor, the temperature of the cooling jacket or the temperature of the outlet flow of the cooling jacket and the ambient temperature may be taken into account. Based on these values an abrupt change in reactor temperature is calculated and the derived trajectory is shifted back to this point in time.

A further or additional method to determine the starting point at which the derived trajectory is applied to the subsequent process may be the use of an Extended Kalman Filter that typically minimizes the variance of the estimated variables in the presence of measurement noise, uncertainty in the reactor model and an uncertain initial state. The Extended Kalman Filter in particular dynamically estimates the reaction enthalpy. As input parameters for example a reactant temperature, reactor temperature, cooling jacket inlet temperature and/or a cooling jacket temperature may be fed into the filter. Using the Extended Kalman Filter may lead to a very accurate determination of the starting point.

The point in time can also be defined by a discrete event, e.g., start-up, shutdown or load change of a reactor or a distillation column or the detection of a fault or disturbance of the process by at least one sensor or the addition of a catalyst to the reaction.

According to the teachings above, the steps of the proposed method can be repeated. If multiple processes are executed in succession, then the trajectories of the manipulated variable of each of the multiple preceding processes are taken into account to determine the derived trajectory for the subsequent process. By using the derived trajectories of the manipulated variable from multiple and favorably all preceding processes, the accuracy of the derived trajectory constantly improves. By applying the derived trajectory, there are less overshoots in the manipulated value and more important in the actual value compared to the setpoint value. From process to process or from batch to batch, the necessary adjustments of the manipulated variable by the controller in order to control the process variable on the setpoint decrease with every batch, such that the final trajectory converges to the manipulated variable.

The derived trajectory may be determined from a superposition of a recorded derived trajectory in the preceding process and the recorded trajectory of the manipulated variable shifted backwards in time.

The superposition of recorded trajectories in order to derive the derived trajectory may be calculated as a filtering over the processes via a low-pass filter for each time step t (of the batch time) defined as a weighted sum of the previous recorded trajectory and the shifted trajectory: ${M}_{d , k + 1} \left(t\right) = \left(1-α\right) {M}_{d , k} \left(t\right) + α {M}_{shift , k} \left(t\right)$ wherein
α = factor ∈ [0,...,1]
k = number of process iteration (batch)
t = discrete time point during a process ∈ [tₛₜₐᵣₜ,t_{end}]
tₛₜₐᵣₜ = start time of the process
t_{end} = final time of the process.
delay = delay of the underlying control loop
M_{d,k+1} = derived trajectory of the manipulated variable for process k+1 based on the trajectories of the manipulated variable of the previous processes
Mₖ = modification of the controller relative to the current trajectory M_{d,k} ${M}_{k} \left(t\right) = {MV}_{k} \left(t\right) - {M}_{d , k} \left(t\right)$ for t element [tₛₜₐᵣₜ, t_{end}].
   MV = recorded actual trajectory of the manipulated variable of the preceding process
   Wherein Mₖ(t) can be taken as
      i) as output from the PID or MPC controller
      ii) Mₖ(t) = temperature difference between jacket and reactor or = output of the controller for controlling the process variable
M_{shift,k} = modification of the manipulated variable Mₖ(t) relative to the derived trajectory, shifted backwards defined as
M_{shift,k}(t)= Mₖ(t+delay) for t element [tₛₜₐᵣₜ, t_{end}-delay], wherein delay is the underlying delay of the process.

A lead-lag element instead or in combination with backward time shift may be applied. The lead part of the lead-lag element provides dynamic compensation of the underlaying delay of the process mainly due to the delay in controlling the cooling jacket temperature. However, although the lead element provides a dirac impulse to the modification signal it typically does not move the signal backwards in time.

The superposition over the processes is conducted for each time instance t of the process.

For example, M_{d,3} is the derived trajectory to be applied to the subsequent process, e.g., a third batch, and M₂ is the recorded trajectory of the modification of manipulated variable of the preceding process relative to the derived trajectory M_{d,2} of the second batch. Alpha may be chosen between 0 and 1 and is typically 0.5. The generation of the derived trajectory from batch to batch using this superposition is stable. An advantage of this superposition with a damping factor for the previous signal is that is has a filtering of the previous signal. The adjustment from the controller based on the controller adjustment in the previous batch then moves backwards filtered and so leads to only a limited countering adjustment in the next process and further processes.

Another possibility to derive the derived trajectory is: ${M}_{d , k + 1} = {M}_{d , k} + α {M}_{shift , k}$

Wherein α can be chosen between 0 and 1 and may be in particular 0.2. With this superposition, the optimizing of the process control is done in an aggressive and fast way. Here, the modification of the controller relative to the derived trajectory is shifted backward unfiltered, which leads to a modification in the following batch (because the reactor temperature will not be exactly on the setpoint) which is shifted backward unfiltered for the next batch and so on. This can lead to self-amplifying oscillations in the generation of the derived trajectory and an unstable control of the reactor temperature.

In order to prevent such kind of noise amplification or to dampen noise in general, e.g. from the process or the measurements, the so determined derived trajectory in particular is subjected to a noise suppression algorithm which is applied to the trajectory within a process or batch.

The so calculated derived trajectory inherently contains the information of all the previous processes because M_{d,k+1} itself is a superposition of M_{shift,k} to M_{shift,1}.

In a further non-limiting embodiment, the derived trajectory of the manipulated variable is subjected to additional filtering over the time t within a batch in order to achieve noise reduction before applying to the subsequent process. This noise reduction particularly reduces the backwards shifted modification from the controller which results from the previous backwards shifted modification and so on which can become self-amplifying. The noise reduction can be implemented via forward filter (a first order delay Filter or PT1) which is applied to the derived trajectory within each batch itself. $\begin{matrix}{M}_{d , k + 1 , filtered} \left(t+1\right) = {τ}_{st} / \left({τ}_{ff}+{τ}_{st}\right) * {M}_{d , k + 1} \left(t+1\right) + \\ + {τ}_{ff} / \left({τ}_{ff}+{τ}_{st}\right) * {M}_{d , k + 1 , filtered} \left(t\right)\end{matrix}$ wherein
M_{d,k+1, filtered} = derived trajectory of the manipulated variable for process k+1 derived from the previous processes filtered over the trajectory elements within the process
τ_{ff} = forward filter time
τₛₜ = sampling time of the time-data series
   and
t = discrete time point during a process ∈ [tₛₜₐᵣₜ,t_{end}] from start time to end time M_{d,k+1,filtered}(tₛₜₐᵣₜ) initialized with M_{d,k+1}(tₛₜₐᵣₜ)

The forward filtering maybe followed by a backward filter to achieve zero-phase shift filtering. $\begin{matrix}{M}_{d , k + 1 , filtered , bf} \left(t-1\right) = {τ}_{st} / \left({τ}_{bf}+{τ}_{st}\right) * {M}_{d , k + 1 , filtered} \left(t-1\right) + \\ + {τ}_{bf} / \left({τ}_{bf}+{τ}_{st}\right) * {M}_{d , k + 1 , filtered , bf} \left(t\right)\end{matrix}$ wherein
τ_{bf} = backward filter time
M_{d,k+1, filtered,bf} = derived trajectory of the manipulated variable for process k+1 derived from the previous processes after back filtering over the trajectory elements within the process
   and
t = discrete time point during a process ∈ [t_{end},tₛₜₐᵣₜ] from end time to start time M_{d,k+1,filtered,bf}(t_{end}) initialized with M_{d,k+1,filtered}(t_{end})
M_{d,k+1,filtered,bf} may be applied as derived trajectory for the next batch instead of M_{d,k+1} and/or may be applied in the filtering of the derived trajectory from batch to batch ${M}_{d , k + 1} = {M}_{d , k , filtered , bf} + α {M}_{shift , k}$

The noise reduction can be applied for each newly calculated derived trajectory following a completion of a process or after a set of completed processes.

In a further non-limiting embodiment, the derived trajectory is applied to the subsequent process in a timely congruent manner. This means, that for each point in time of the subsequent process, the derived trajectory for this particular point in time t in the previous process is applied. This includes also the backwards in time shifted derived trajectory, which is applied according to the shifted time. The derived trajectory is applied in a time-by-time manner, wherein the time steps are defined by the sampling rate of the sensors and/or controllers.

Further, the present teachings relate to a computer software product comprising instructions which when executed by a suitable processor cause the processor to perform the steps of the above-described method. Such processors may be general-purpose central processing units (CPUs) found in personal computers and servers or also specialized processors such as digital signal processors (DSPs) and microcontrollers. A processor may be part of a programmable logic controller (PLC) or an industrial computer.

The invention further relates to a method for the production of chemicals in a repetitive process, in particular a synthesis process of polymer materials. During the production process a method for controlling the repetitive process according to the teachings above is applied.

Further embodiments and advantages are explained in the following according to the figures. Shown on:
- Fig. 1: is a schematic representation of a reactor setup,
- Fig. 2: is a diagram of a heat of reaction over time and the manipulated variable over time in the form of a temperature difference of reactor and cooling jacket,
- Fig. 3: is a diagram of the reactor temperature over time and of the cooling jacket temperature over time,
- Fig. 4: is a schematic representation of the method for controlling repetitive processes,
- Fig. 5: is a flow chart of a first embodiment of a method for controlling repetitive processes for controlling the temperature via the cooling jacket,
- Fig.6: is a flow chart of a second embodiment of a method for controlling repetitive processes for controlling the temperature via the cooling jacket,
- Fig. 7: is a flow chart of a first embodiment of a method for controlling repetitive processes for controlling the temperature via the catalyst flow,
- Fig. 8: is a flow chart of a second embodiment of a method for controlling repetitive processes for controlling the temperature via the catalyst flow,
- Fig. 9: is a diagram of a modification trajectory resulting from the controller output and the derived trajectory using the cooling temperature of the cooling jacket as a manipulated variable and a shifted trajectory of this trajectory,
- Fig. 10: is an enlarged view of a detail of Fig. 9,
- Fig. 11: is a diagram of a derived trajectory resulting from the controller output and the derived trajectory using the catalyst flow as a manipulated variable and a trajectory of trajectory of this trajectory,
- Fig. 12: is a diagram showing the reactor temperature over time for nine succeeding batches,
- Fig. 13: is a diagram showing the cooling jacket temperature over time for nine succeeding batches,
- Fig. 14: is a diagram showing the modification of the manipulated variable ΔT over time for nine succeeding batches,
- Fig. 15: is a diagram showing the derived trajectory for the manipulated variable ΔT over time for nine succeeding batches,
- Fig. 16: is a diagram showing the catalyst flow over time for nine succeeding batches,
- Fig. 17: is a diagram showing the modification of derived trajectory for the catalyst flow over time for nine succeeding batches and
- Fig. 18: is a diagram showing the derived trajectory for the catalyst flow over time for nine succeeding batches.

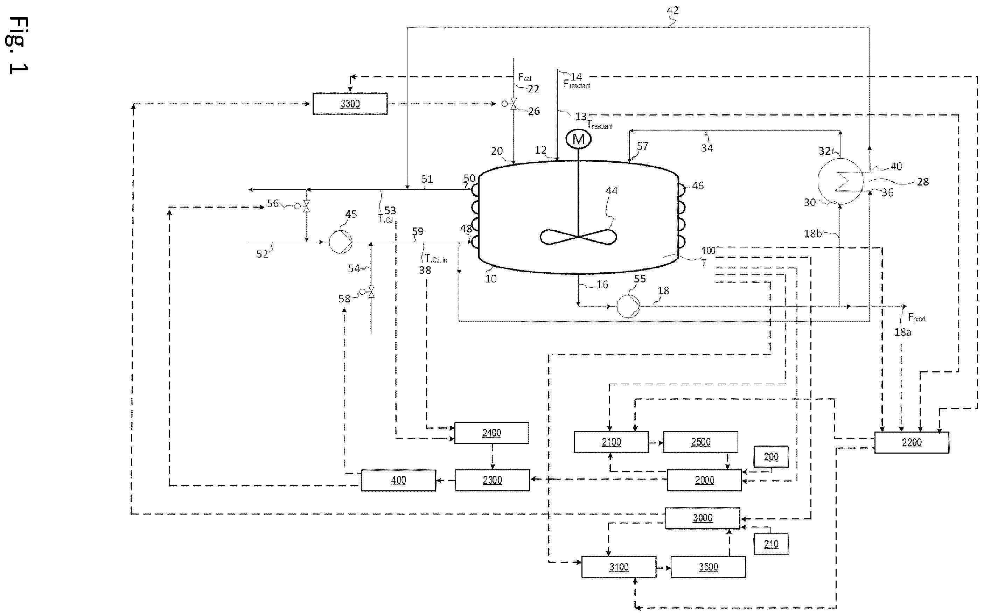

Fig. 1 shows a reactor setup 1 in a schematic representation.

The reactor setup comprises a reactor 10. The reactor 10 comprises an inlet 12 for a reactant stream 14 towards the reactor 10 and an outlet 16 for a product stream 18 from the reactor 10. The reactant stream 14 has a flow rate F_{reactant} and an inlet temperature 13 T_{reactant}. A part of the product stream 18a leaves the reactor and has a flow rate F_{prod}.

Further the reactor 10 comprises an inlet 20 for a catalyst stream 22 with a catalyst flow rate F_{cat}. The flow rate of the catalyst stream 22 is controlled by means of valve 26.

Further the reactor 10 comprises an outlet 16 for the product stream 18. The product stream is set by means of pump 55.

The product stream 18 is split: a first product stream 18a is removed from the reaction and a second product stream 18b is fed to an external heat exchanger 28 from which it is recycled to inlet 57 of the reactor. The heat exchanger has two compartments. The external heat exchanger 28 comprises an inlet 30 to the first compartment for the recycled product stream 18b and an outlet 32 from the first compartment to return the cooled, recycled product stream 34 to the reactor 10 for a further reaction.

The external heat exchanger 28 further comprises an inlet 36 to the second compartment for coolant 59 and a second outlet 40 from the second compartment for a heated coolant 42.

Surrounding the reactor 10, a cooling jacket 46 is arranged. The cooling jacket 46 is supplied with coolant 59 with a temperature T_{CJ,in} 38 via a coolant inlet 48 and a coolant outlet 50 for heated coolant 51 (heated for the case of an exothermic reaction; cooled for an endothermic reaction). The coolant stream is set by means of pump 45. The temperature of the coolant 59 is determined by the relation of the following streams
i) fresh coolant 52
ii) recycled coolant 53
iii) steam 54

The recycled coolant 53 with temperature T_{CJ} is mixed by:
i) heated coolant 51 coming from the cooling jacket 46
ii) heated coolant 42 coming from the external heat exchanger 28.

The ratio between recycled coolant 53 and fresh coolant 52 is controlled by means of valve 56. The insertion of steam is controlled via valve 58.

Further, the reactor 10 comprises a stirrer 44.

Now, following the description of most of the hardware of the reactor setup, the controlling means are described below.

As one process variable, the actual value of the reactor temperature 100 (T) is controlled by a reactor temperature controller 2000. The reactor temperature controller 2000 compares the actual value of the reactor temperature 100 (T) with a predetermined setpoint temperature 200. The reactor temperature controller 2000, as primary controller, feeds a control value to the underlying cooling jacket controller 2300, which - with further input of a selector 2400 selecting the temperature of the coolant 38 T_{CJ,in} or of the recycled coolant 53 T_{CJ} - sets the steam valve 58 and the valve 56 via splitter block 400 for the recycled coolant in order to set the temperature T_{CJ,in} 38 of the coolant 59, which influences the reactor temperature T 100. The coolant temperature T_{CJ,in} or the recycled coolant temperature T_{CJ} of the coolant 59 is a manipulated variable here (for the primary controller).

The reactor temperature 100 is further transmitted to and controlled by another reactor temperature controller 3000 with a predetermined setpoint temperature 210, which then sets the catalyst flow via the underlying catalyst flow controller 3300. The addition of catalyst to the reaction via valve 26 influences the reaction inside the reactor 10 and also the reactor temperature 100 (T). The flow rate of the catalyst F_{cat} is also a manipulated variable.

Hence, both the setting of the coolant temperature T_{CJ,in} as well as the amount of catalyst has an influence on the actual value of the reactor temperature 100 (T).

Further, as one of the main aspects of the present teachings, the trajectories of the values of the manipulated variable of the reactor temperature controller 2000, the reactor temperature 100 and the values of the manipulated variable reactor temperature controller 3000 are applied to the batch-to-batch blocks 2100 and 3100, respectively.

Additionally, the reactor temperature T is fed together with F_{product}, T_{reactant} and F_{reactant} into a calorimetric model 2200 to determine the start of the reaction (leading to an abrupt change of the reactor temperature 100 (T)).

The result from the calorimetric model 2200 for the detection of the start of the reaction is handed over to the calculation blocks 2100 and 3100, respectively, , wherein the derived trajectories of the manipulated values for the cooling jacket and catalyst flow are calculated, respectively, in order to control the subsequent batch with reactor temperature controller 2000 and 3000 in terms of temperature and addition of catalyst. The derived trajectories for the cooling jacket temperature and the catalyst flows are stored in 2500 and 3500, respectively, and applied in the subsequent batch.

Fig. 2 and Fig. 3 illustrate the principle of the batch-to-batch concept using the delta temperature difference between reactor and cooling jacket as approximation for the trajectory of the heat of reaction and applying this information shifted to an earlier time to compensate the underlying delay in the subsequent batch which then generates a modified delta temperature difference which is shifted backwards and is then applied to the batch following the subsequent batch and so on. As mentioned above, Fig. 2 illustrates the approximate representation of the heat of reaction Qr of batch 90 via the actual temperature difference between reactor and cooling jacket ΔT of batch 90 of the heat transfer Q, multiplied by heat transfer coefficient k and surface A. For subsequent batch (not shown), the temperature difference 90 is applied shifted backwards, yielding the to be implemented temperature difference ΔT of subsequent batch, which leads to a tighter control of the reactor temperature on its setpoint. Fig. 3 shows the reactor temperature being controlled on the setpoint Tₛₑₜ via the cooling jacket temperature for the initial batch 90.

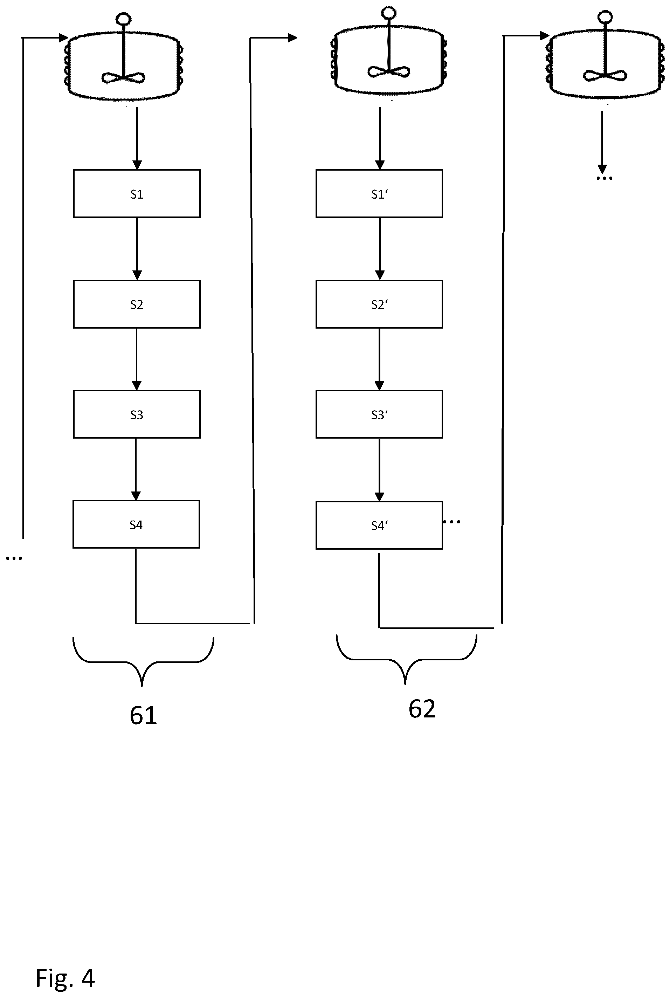

In Fig. 4 a schematic flow chart of a method for controlling repetitive processes is shown.

The succeeding repetitive processes comprise a current process 61 and a subsequent process 62. Here, two succeeding processes 61, 62 are shown as representatives of a series of processes. Prior to the current process 61, one or more preceding processes are performed (not shown) and also after the subsequent process 62 one or multiple succeeding processes are performed (not shown). The current process 61 and the subsequent process 62 in this case are both processes, conducted in a reactor as described in combination with Fig. 1.

### Step S1:

During the duration of the current process 61, as a first step, S1, an actual value of a process variable, such as the reactor temperature T, is measured and the process value is controlled via a cascaded system of reactor temperature controller 2000 and a cooling jacket controller 2300, and a cascaded system of reactor temperature 3000 and a catalyst flow controller 3300. In order to control the actual value of the process variable 100 (T) to a setpoint value manipulated variables, such as the temperature T_{CJ,in} of coolant 59 and catalyst flow 22 are used.

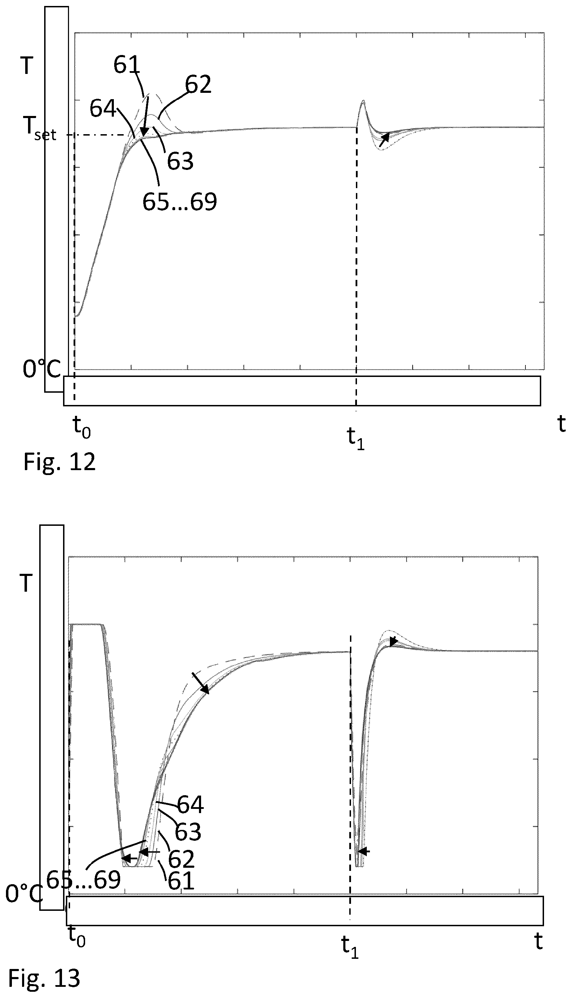

The controlling is based on a derived trajectory of a manipulated value (which is handed over to the current process from process 60 preceding the current process (not shown)), the addition of the current reactor temperature (this part is only considered if the process variable is controlled via the difference of cooling jacket temperature and reactor temperature) and the chosen control parameters of the reactor temperature controller. Particular control cycles are explained with respect to Fig. 12 to Fig. 18.

### Step S2:

Calculation of the temperature difference between the cooling jacket temperature 38 T_{CJ,in} (or cooling jacket temperature 53 T_{CJ}) and the reactor temperature 100 as process variable as time-data series of the manipulated variable over the previous process. The profile of the temperature difference is equivalent to the profile of the heat of reaction though delayed by the underlying process dynamics and the tuning of the cooling jacket controller.

For the case that the process variable is not a reactor temperature controlled by the temperature difference between cooling jacket and reactor, the output of the primary controller 2000 or 3000 is taken directly as time-data series of the manipulated variable.

For the catalyst flow, the output of the primary controller 3000 is taken directly as time-data series of the manipulated variable. Based on this time-data series of the manipulated variable a modification signal is calculated based on the correction of the manipulated variable relative to the derived trajectory that was applied in step S1.

### Step S3:

From the trajectory of the modification signal, recorded in step S2, in step S3 a trajectory of the manipulated variable is derived, by shifting the trajectory of the modification signal backwards in time according to the delay of the underlying delay (from the cooling jacket temperature control for controller 2000; from the flow control of the catalyst for controller 3000).

### Step S4:

Superimposing the shifted recorded trajectory of the modification signal with the trajectories that were derived in the previous processes. This derived trajectory is applied to the subsequent process 62 in step S1'.

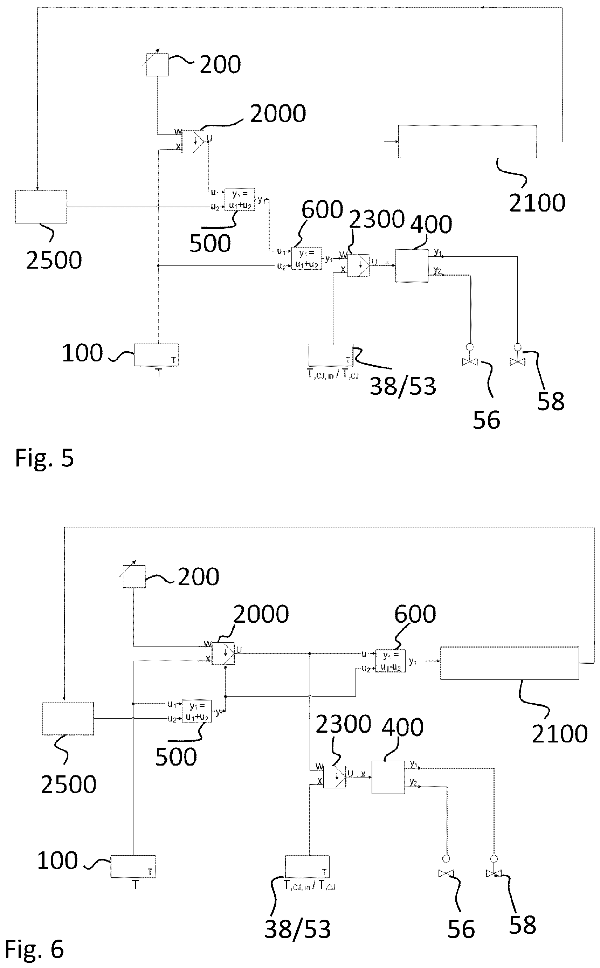

Fig. 5 and 6 show two different embodiments of a control cycle of process 61 to control the reactor temperature with the cooling jacket temperature.

As an actual value of the process variable, the reactor temperature T is measured in 100. The actual value is sent to the reactor temperature controller 2000. Further a setpoint value 200 for the reactor temperature is fed to the reactor temperature controller 2000.

In order to set the actual value to the setpoint temperature, the reactor temperature controller 2000 gives out a setpoint value for the temperature of the cooling jacket 46, which is used in the cooling jacket controller 2300 to set the temperature of the cooling jacket 46. The temperature of the cooling jacket is a manipulated variable. This is referred to as a cascaded control cycle.

The temperature T_{CJ,in} at the inlet of the cooling jacket and/or the temperature T_{CJ} of the recycled coolant are measured at 38 and/or 53 and compared to the setpoint value from the cooling jacket controller 2300. If a difference is detected, the recycle valve 56 and/or the steam valve 58 are activated to reach the desired temperature, via a splitter function block 400.

The teaching in Fig. 5, the control cycle further comprises a delta temperature controller (where the output of controller 2000 represents the delta temperature) with transfer block 500 and linearization module 600. Block 500 adds the derived trajectory from block 2500 that was derived from the previous processes 1 to 60 of the manipulated variable from the previous batches to the current output of the running controller. In case that the manipulated variable represents a delta temperature between reactor and cooling jacket, the reactor temperature is added to the manipulated variable in 600 yielding the input for the cooling jacket controller 2300. The teachings in Fig. 6 achieve the same result by defining the controller output (where the output of controller 2000 represents the cooling jacket temperature) directly as input for the cooling jacket controller 2300 and adding both the derived trajectory and the reactor temperature via the feedforward of the controller. The feedforward presets the output of the controller 2000 depending on the derived trajectory 2500. The controller 2000 modifies the output depending on the reactor temperature 100 and the setpoint value 200. Hence, a movement in the derived trajectory and/or the reactor temperature is passed on directly to the controller output, i.e. the contribution of the PID-algorithm to the controller output effectively represents a modification to derived trajectory and/or the delta temperature. The output of controller 2000 is applied to block 2100 where the recorded trajectory from the current process (MV) is shifted in time and superimposed with the recorded trajectory of the manipulated variable, and then stored in storage module 2500. In the teaching of Fig. 5, the input to block 2100 is the output of controller 2000 (representing the modification of the delta temperature), while in the teaching of Fig. 6 the modification of the delta temperature is calculated in block 600 according to the output of controller 2000, the derived trajectory and the reactor temperature.

For both teachings in Fig 5 and Fig 6, the modification of the delta temperature as input to block 2100 (batch-to-batch control module) is applied to derive the derived trajectory of the manipulated variable for the subsequent batch. In block 2100, the recorded trajectory from the current process (MV) is shifted in time and superimposed with the recorded trajectory of the manipulated variable, and then stored in a storage module 2500. Further the derived trajectory is used as input from 2500 to be applied as derived trajectory to support the control in the subsequent process 62.

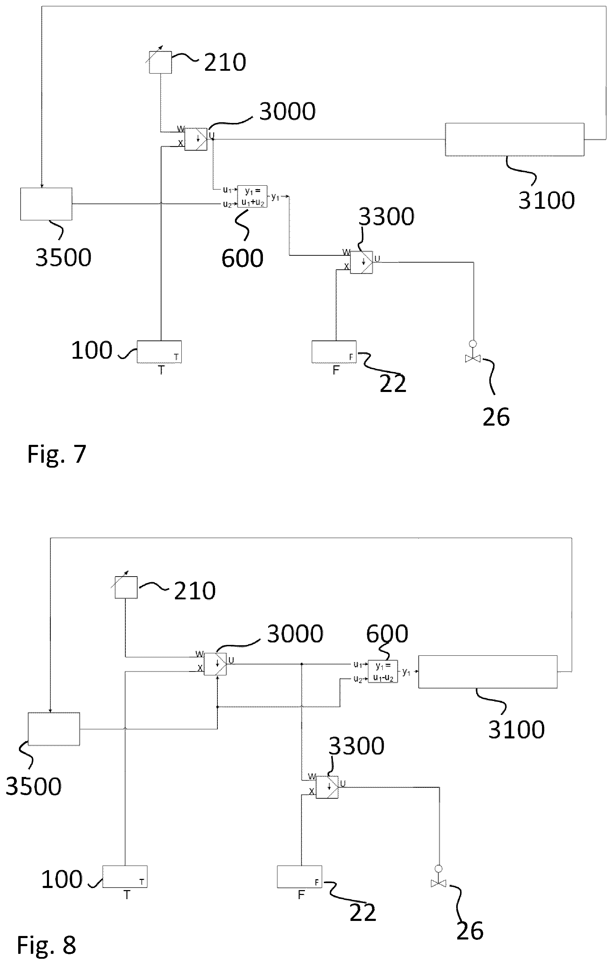

Fig. 7 and Fig. 8 show two different embodiments of a control cycle of process 61 to control the reactor temperature with the catalyst flow. These two embodiments also represent the control of a general unit (when exchanging the reactor temperature 100 with any other process variable) with a general manipulated variable (when exchanging the catalyst flow with any other manipulated variable) that is subject to subsequent processes or batches. Fig. 7 is similar to the embodiment in Fig. 5, apart from that manipulated variable does not represent a difference to the process variable that is to be controlled (the process variable is not added to the manipulated variable to yield the setpoint of the underlying control). The output of controller 3000 (that controls the reactor temperature 100 to setpoint 210) represents the modification of the derived trajectory. The addition of the modification to the derived trajectory in block 600 yields the setpoint to the underlying control 3300 that controls the catalyst flow 22 by means of valve 26. The input to batch-to-batch module 3100 is the output of controller 3000. The embodiment of Fig. 8 differs from the embodiment of Fig. 7 such that the output of controller 3000 represents the setpoint of the underlying control. Similar to the embodiment of Fig. 6, the derived trajectory from block 3500 is added to controller 300 via a feedforward. The input to batch-to-batch module 3100 is derived from subtracting derived trajectory from the output of controller 3000 in block 600.

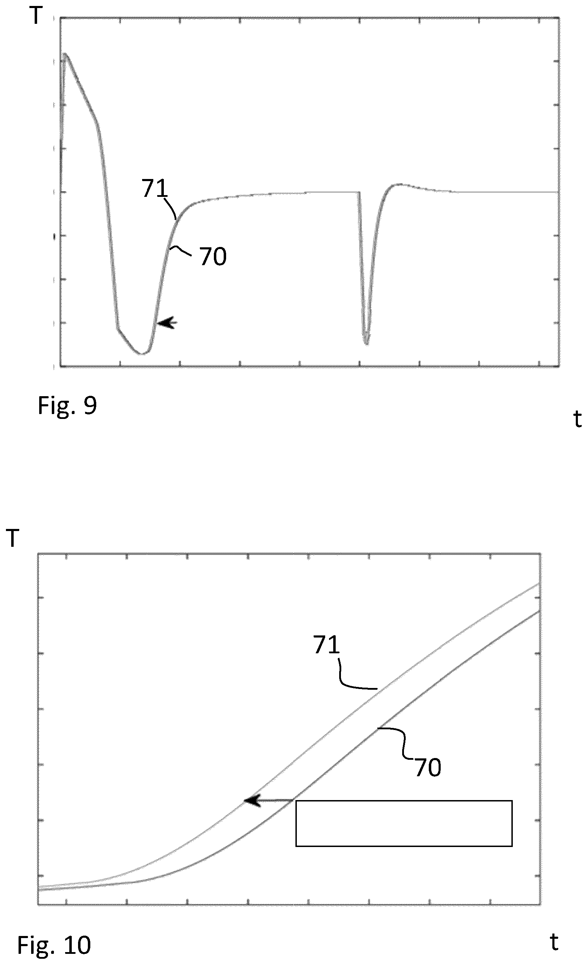

Fig. 9 shows a diagram, with temperature on the y-axis and time on the x-axis. Fig. 9 depicts a trajectory 70 of the modification signal M of the difference between the cooling temperature of the cooling jacket 46 and reactor temperature 100 of reactor 10 resulting from the controller output of 2000 and the derived trajectory 2500 that is applied to the current batch. Trajectory 71 is the signal M_{shift}, which results from shifting backwards in time with comparison to trajectory 70. Fig. 10 is an enlarged view of a detail of Fig. 9, where the shift backwards in time of the modification trajectory 71 in comparison to the recorded trajectory 70 is visible in more detail.

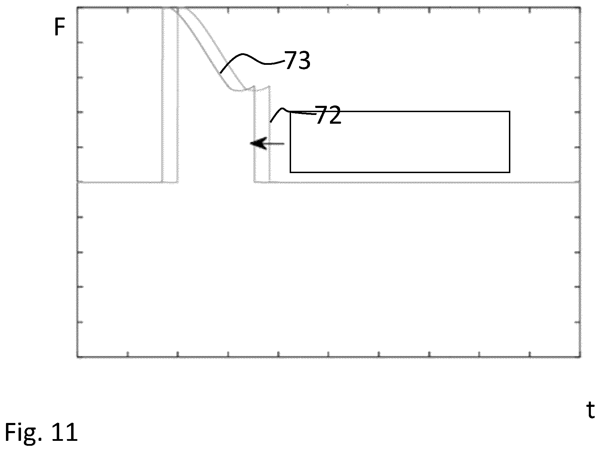

Fig. 11 is a diagram with a catalyst flow rate F on the y-axis and time on the x-axis. Fig. 11 shows a recorded trajectory 72 of the modification signal M of the catalyst flow 22 resulting from the controller output of 3000 and the derived trajectory 3500 that is applied to the current batch. Trajectory 73 is the signal M_{shift}, which results from shifting backwards in time with comparison to trajectory 72.

In the following figures 12 to 18, different diagrams are shown, which are based on simulations of a reactor filled with reactants which are initially heated up triggering a first exothermic reaction starting from time t₀ as depicted in Fig. 12 which once started requires the reactor to be cooled. In a second phase starting from time t₁ as depicted in Fig. 12, a catalyst is added to the reactor which triggers another exothermic reaction. The temperature is controlled during the whole batch by adjusting the inlet temperature of the cooling jacket and the dosing of catalyst.

During 9 simulated batches the performance of the control scheme is demonstrated.

Fig. 12 is a diagram showing a trajectory of the actual value of the process variable, which is here the reactor temperature T. The temperature is plotted on the y-axis and the time is plotted on the x-axis. The trajectory of the reactor temperature is plotted over the time of batches 61 to 69 with 61 as the first batch in this example. Several trajectories are shown, which are trajectories recorded for the nine succeeding batches. The trajectories of the process variable of batches 61 to 63 show a rise in temperature above the setpoint temperature Tₛₑₜ, which is caused by the start of the exothermic reaction and not yet sufficient cooling. The reactor temperature controller 2000 with the support from the derived trajectory from block 2500 controls the reactor temperature by means of the cooling jacket temperature, so that the reactor temperature has no overshoot over the temperature setpoint Tₛₑₜ for batches 64 to 69.

A second maximum is caused by addition of catalyst at t₁ and the controllers 2000 and 3000 control the actual value to the setpoints value Tₛₑₜ 200 and 210 by means of the cooling jacket temperature and the catalyst flow, respectively. (Temperature setpoint 210 is chosen slightly above temperature setpoint 200). The reactor temperature controllers 2000 and 3000 with the support from the derived trajectories from blocks 2500 and 3500 control the reactor temperature by means of the cooling jacket temperature and the catalyst flow.

Several trajectories of the process variable are shown in Fig. 12 for succeeding batches. From batch to batch the overshoot of the reactor temperature in the first maximum is reduced. And also in the second maximum, the overshoot after the maximum is reduced from batch to batch.

In Figures 12 to 18, the "--" line depicts batch 61, the "···" line depicts batch 64 and the "· - ·" line depicts batch 69.

In summary, from batch to batch, the reactor temperature is kept closer to the setpoint value Tₛₑₜ, leading to a more controlled process with an improved product quality.

Fig. 13 is a diagram showing the corresponding setpoint of the cooling jacket temperature T_{CJ} = T + ΔT at the y-axis plotted over time of batches 61 to 69 on the x-axis with batch 61 being the first batch and no information from the previous batches. The cooling jacket temperature is the manipulated value to control the reactor temperature to the setpoint value as shown in Fig, 12.

At t₀ the temperature of the cooling jacket is increased to a hotter temperature in order to run the reactor temperature to its higher setpoint while at and t₁ the temperature of the cooling jacket is decreased to cooler temperature than the reactor in order to cool the reactor. It can be seen, that from batch to batch the trajectory of the cooling temperature starts earlier to become hotter in the first phase and cooler in the second phase in order to control the reactor temperature closer to its setpoint. Furthermore, the counteraction of the cooling temperature in order to reduce the overshoot of the reaction temperature starts earlier from batch to batch. When the heat of reaction is triggered (when a certain temperature is surpassed in the first phase and the catalyst added in the second phase the trajectory of the cooling temperature is moved forward from batch to batch in order to compensate the heat of reaction.

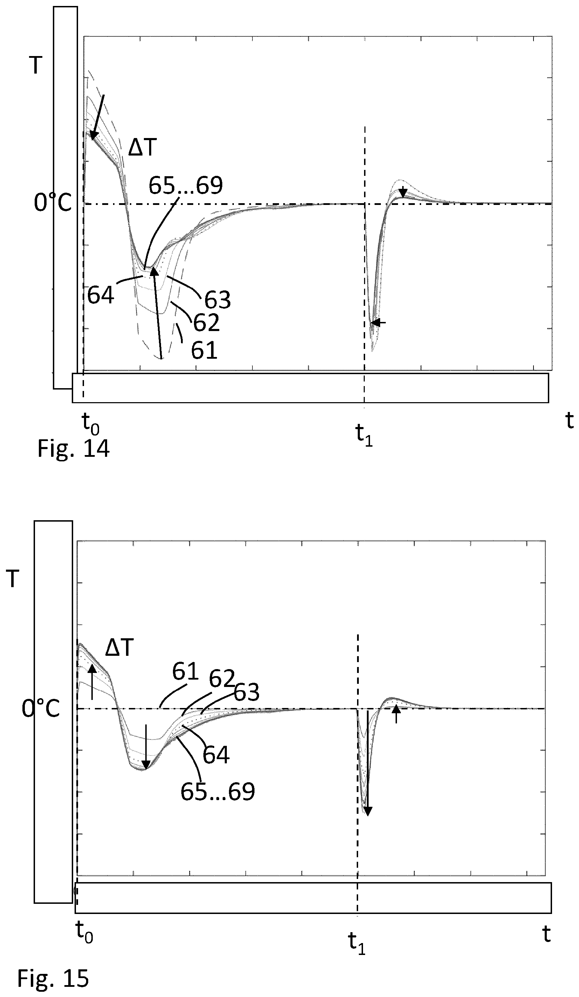

Fig. 14 is a diagram showing for each batch the modification of the controller 2000 to the trajectory for the temperature difference ΔT between cooling jacket and reactor from block 2500 as depicted in Fig 5 (in the second embodiment case with feedforward it is the output of block 600, see Fig. 6) which as time-data series is then used by the batch-to-batch controller block 2100 which then calculates the derived trajectory for the next batch according to the above described algorithm. The necessary modification conducted by controller 2000 decreases from batch to batch.

Fig. 15 is a diagram showing the derived trajectory of the delta temperature ΔT as manipulated variable for each batch. The derived trajectory builds up from batch 61 to batch 69. The derived trajectory applied for the first batch 61 is zero and then builds up from batch to batch until it converges to a final trajectory for a constant physical behavior of the process. The derived trajectory moves also backwards in time in order to apply the cooling earlier compensating the inertia of the underlying cooling system.

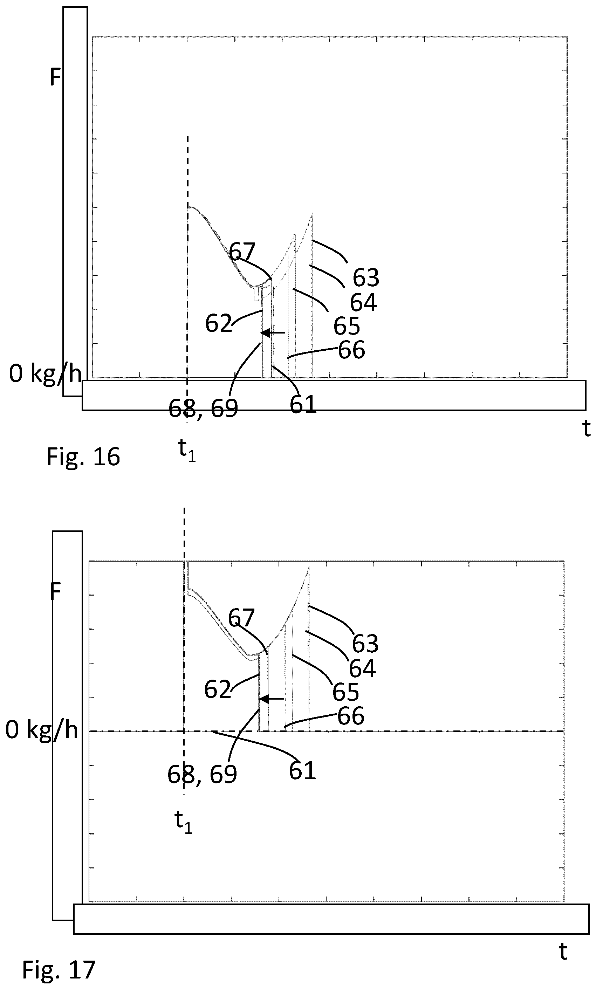

Fig. 16 is a diagram showing the setpoint of the catalyst flow F at the y-axis plotted over time on the x-axis for batches 61 to 69. The catalyst flow is the second corresponding manipulated variable to control the reactor temperature to the setpoint value as shown in Fig. 12.

Fig. 17 is a diagram showing for each batch the modification of the controller 3000 to the derived trajectory for the catalyst flow F from block 3100 as depicted in Fig 7 (in the second embodiment case with feedforward it is output of block 600, see Fig 8) which as time-data series is then used by the batch-to-batch controller block 3100 in order to prepare the derived trajectory for the next batch. Overall, the modification decreases from batch to batch.

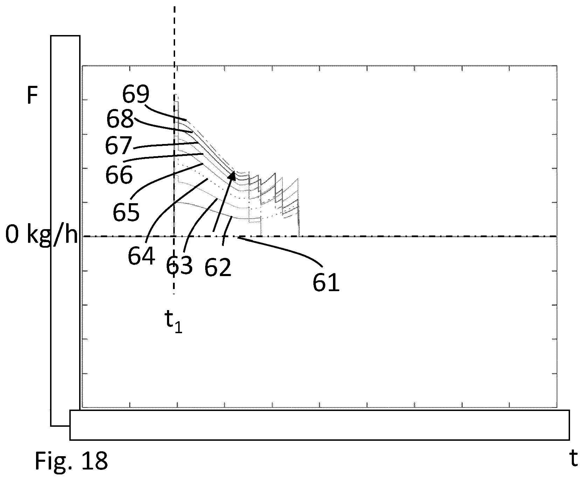

Fig. 18 is a diagram showing the derived trajectory calculated for the catalyst flow F from block 3500. The modification applied for the first batch 61 is zero and then builds up from batch to batch until it converges to a final trajectory for a constant physical behavior of the process. The derived trajectory moves also backwards in time in order to heat-up the temperature earlier (the setpoint of controller 3000 is above the setpoint of controller 2000, hence the controller via the catalyst tries to heat up the reaction when the second phase start).

### List of reference signs

- 10: reactor
- 12: reactant inlet
- 13: reactant temperature
- 14: reactant stream
- 16: outlet
- 18: product stream leaving the reactor
- 18a: first product stream
- 18b, 34: recycled product stream
- 20: catalyst inlet
- 22: catalyst stream
- 26: catalyst valve
- 28: external heat exchanger
- 30: inlet to first compartment of heat exchanger
- 32: outlet from first compartment of heat exchanger
- 36: inlet to second compartment of heat exchanger
- 38: inlet cooling jacket temperature
- 40: outlet from second compartment of heat exchanger
- 42: heated coolant
- 44: stirrer
- 45: pump of coolant flow
- 46: cooling jacket
- 48: coolant inlet
- 50: coolant outlet
- 51: heated coolant
- 52: fresh coolant
- 53: heated coolant temperature after cooling jacket and external heat exchanger
- 54: steam
- 55: pump of the reactant outlet flow
- 56: recycle valve
- 57: inlet of heated product
- 58: steam valve
- 59: coolant
- 60: process
- 61: process
- 62: process
- 63: process
- 64: process
- 65: process
- 66: process
- 67: process
- 68: process
- 69: process

- 70: trajectory
- 71: trajectory
- 72: trajectory
- 73: trajectory
- 90: batch run with profiles of temperature, cooling jacket temperature, heat of reaction, temperature difference, shifted temperature difference

- 2000, 3000: reactor temperature controller (primary controllers)
- 2100, 3100: batch-to-batch algorithm to generate the derived trajectory for each primary controller
- 2200: calorimetric model
- 2300: cooling jacket controller
- 2400: selector
- 2500, 3500: derived trajectory for subsequent batch
- 3300: catalyst flow controller

- 100: reactor temperature
- 200: setpoint value for temperature control via cooling jacket
- 210: setpoint value for temperature control via catalyst flow
- 400: splitter function block
- 500: transfer module
- 600: linearization module

## Claims

1. Method for controlling repetitive processes, with at least one preceding process and a following subsequent process, the method comprising the following process steps:
- Measuring of an actual value of a process variable during the preceding process;
- Control of the actual value of the process variable to a setpoint value using a manipulated variable;
- Recording of a trajectory of the manipulated variable during the preceding process;
- Deriving a derived trajectory of the manipulated variable for the subsequent process from the trajectory of the manipulated variable of the preceding process, wherein for the derived trajectory of the manipulated variable the trajectory of the manipulated variable of the preceding process is shifted backwards in time in relation to the time sequence of the subsequent process compared to the trajectory of the manipulated variable of the preceding process in relation to the time sequence of the preceding process;
- Applying the derived trajectory of the manipulated variable to the subsequent process.

2. Method according to the preceding claim,
**characterized in that**
the actual value of the process variable and the trajectory of the manipulated variable are also measured during the subsequent process and are used to derive a further derived trajectory applied on a further subsequent process following the subsequent process.

3. Method according to one of the preceding claims,
**characterized in that**
the process variable is a process temperature, a process pressure, a reactant flow, a composition of a product, a density of a product and/or the viscosity of a product.

4. Method according to one of the preceding claims,
**characterized in that**
the manipulated variable is a cooling flow, a heat flow, a catalyst flow, a return flow of a distillation column, a steam flow and/or a steam pressure.

5. Method according to one of the preceding claims,
**characterized in that**
the start of the application of the derived trajectory of the manipulated variable is determined based on an abrupt change of the actual value of the process variable in the preceding process.

6. Method according to one of the preceding claims,
**characterized in that**
the derived trajectory is shifted backwards in time with respect to the underlying time delay of the subsequent process at most up to a point in time in the subsequent process at which an abrupt change in the actual value occurs.

7. Method according to one of the preceding claims,
**characterized in that**
the derived trajectory is subject to a lead-lag element with respect to the dynamics of the process

8. Method according to claim 6 or 7,
**characterized in that**
the abrupt change is determined by the actual value of the process variable exceeding a predetermined threshold.

9. Method according to claims 6 to 8,
**characterized in that**
the determination of the abrupt change is based on a steady-state calculation of the reaction enthalpy using a steady-state calorimetry model.

10. Method according to one of the preceding claims,
**characterized in that**
multiple processes are executed in succession and the trajectories of the manipulated variable of at least some of the multiple preceding processes are taken into account to determine the derived trajectory of a subsequent process.

11. Method according to the preceding claim,
**characterized in that**
the derived trajectory of the manipulated variable is determined from a superposition of the recorded trajectory of the manipulated variable and the recorded trajectory of the manipulated variable shifted backwards in time.

12. Method according to any of the preceding claims,
**characterized in that** the derived trajectory of the manipulated variable is subjected to a noise reduction before applying to the subsequent process.

13. Computer software product comprising instructions which when executed by a suitable processor cause the processor to perform the steps of the above method claims.

14. Method for the production of chemicals in a repetitive process, in particular a synthesis process of polymer materials, wherein during the production process a method for controlling the repetitive process according to any of the preceding claims is applied.
